# EUROPEAN PATENT APPLICATION

(11) **EP 2 502 823 A1**
(43) Date of publication of application: **26.09.2012**
(21) Application number: 10831712.4
(22) Date of filing: 13.07.2010
(51) Int. Cl.: B63J 99/00, B63H 9/00, F03D 3/04

(54) **SHIP HAVING A WIND POWER GENERATOR**

(30) Priority: 18.11.2009 KR 20090111682
(71) Applicant: Kim, Juen S, Seoul 110-011 (KR)
(72) Inventor: Kim, Juen S, Seoul 110-011 (KR)
(74) Representative: O'Neill, Michelle
(86) International application number: PCT/KR2010/004531
(87) International publication number: WO 2011/062345

(57) **Abstract**

The present invention relates to a ship having a wind power generator, comprising: a structure installed on a deck on an upper surface of the ship; a wind-collecting tower which is spaced apart from the structure, and which is installed on the deck such that the height of wind-collecting tower is lower than the height of the structure, and the width of the wind-collecting structure is smaller than the width of the structure; an air duct for conveying wind introduced from the wind-collecting tower; a turbine which rotates by means of the wind conveyed from the air duct; and a generator which operates in accordance with the rotation of the turbine. The wind-collecting tower comprises: a wind tunnel having a circumferential surface including a plurality of through-holes for the introduction of wind; and a guide unit having a plurality of guide passages arranged along the circumference of the wind tunnel so as to guide wind to the through-holes. The guide unit comprises: a plurality of wind-collecting plates arranged in a radial direction along the circumference of the wind tunnel; and a plurality of guide plates interposed between the wind-collecting plates and spaced apart from each other in a vertical direction. The wind power generator operates to generate power by means of the wind generated during the sailing of the ship or by means of natural wind, thus eliminating the necessity of using the power of an engine for generation, preventing an increase in fuel consumption and improving the efficiency of the energy utilization of the ship.

## Description

### TECHNICAL FIELD

The present invention disclosed herein relates to a ship having a wind power generator, and more particularly, to a ship having a wind power generator which generates power using sea breeze or wind generated during the sailing of the ship.

### BACKGROUND ART

In general, ships include generators autonomously so as to smoothly utilize electricity and provide against emergencies, respectively. Such a generator receives energy generated by mechanical motion of an engine to convert the energy into electricity energy through magnetic coupling between a stator and a rotor, thereby supplying the electricity energy to a load.

However, since such a ship using an engine as a power source uses mixed oil of bunker-C oil and diesel oil as a fuel, costs for the maintenance and sailing are very high.

Furthermore, oil fuel such as the mixed oil used for the ships may generate noxious gases during combustion to cause air and sea pollutants. In recent, the number of ships may be increased to significantly increase the air and sea pollutants. Accordingly, this may have a serious bad influence on all over the ecological system as well as marine organisms.

However, energy sources such as wind power, seawater, and solar are inexhaustible and boundless clean energy. Thus, required is a ship including an electricity generating apparatus in which electricity generated using wind, seawater, solar light which are natural powers may be stored in a battery, and then the stored electricity may be used for various electric devices or directly used as a power source to significantly reduce a usage amount of mixed oil that is a fuel for operating the ships and generating electricity, thereby saving energy and reducing air and sea pollutants.

Accordingly, in the light of the above-described views, a number of inventions related to a ship including a wind power generator is being proposed. However, the inventions have a limitation that the total amount of wind introduced into a wind tunnel is limited to reduce power-generating efficiency because wind blowing in only one direction is guided into the wind tunnel in case where the wind power generator uses wind blowing around the ship.

### DISCLOSURE OF THE INVENTION

### TECHNICAL PROBLEM

The present invention provides a ship having a wind power generator, and more particularly, to a ship having a wind power generator which generates power using sea breeze or wind generated during the sailing of the ship.

### TECHNICAL SOLUTION

Embodiments of the present invention provide ships including a wind-collecting tower, the ships including: a structure installed on a deck disposed on a top surface of the ship; a wind-collecting tower spaced from the structure on the deck, the wind-collecting tower having a height and width less than those of the structure; an air duct connected to a lower end of the wind-collecting tower to transfer wind introduced from the wind-collecting tower; a turbine disposed on one place of the air duct, the turbine being rotated by the wind transferred from the air duct; and a generator connected to the turbine, the generator being operated by the rotation of the turbine, wherein the wind-collecting tower includes: a wind tunnel including a cylindrical member which stands upright on the deck, the wind tunnel having a circumferential surface in which a plurality of through-holes for introducing wind are defined; and a guide part having a plurality of guide passages arranged along the circumference of the wind tunnel to guide wind into the through-holes, wherein the guide part includes: a plurality of wind-collecting plates arranged in a radial direction along the circumference of the wind tunnel; and a plurality of guide plates arranged along the circumference of the wind tunnel, the plurality of guide plates being vertically spaced from each other between the wind-collecting plates, wherein the wind-collecting tower further includes a plurality of louvered winds disposed spaced from the wind tunnel on the guide passages to guide the wind introduced into the wind tunnel downward along the wind tunnel without getting out of the wind tunnel.

In some embodiments, the wind-collecting tower may be disposed closer to a front of the ship than the structure when viewed on the basis of the front of the ship.

### ADVANTAGEOUS EFFECTS

According to the ship including the wind power generator according to the present invention, the wind power generator may be operated by wind generated during the sailing of the ship or the naturally blowing wind. Thus, it may be unnecessary to use power of the engine so as to generate power. Therefore, the fuel consumption may be reduced, and the energy efficiency of the ship may be improved.

### BRIEF DESCRIPTION OF THE DRAWINGS

FIG. 1 is a side view of a ship including a wind power generator according to the present invention.

FIG. 2 is a side sectional view of the wind power generator in the ship including the wind power generator according to the present invention.

FIG. 3 is a front view of the wind power generator in the ship including the wind power generator according to the present invention.

FIG. 4 is a plan view for explaining an effect of the wind power generator of the ship according to the present invention.

<DESCRIPTION OF THE SYMBOLS IN MAIN PORTIONS OF THE DRAWINGS>

| | |
|---|---|
| 10: Wind-collecting tower | 11: Wind tunnel |
| 20: Guide part | 21: Guide passage |
| 22: Wind-collecting plate | 23: Guide plate |
| 30: Air duct | 31: Turbine |
| 32: Generator | 40: Deck |
| 50: Structure | |

### MODE FOR CARRYING OUT THE INVENTION

Hereinafter, the present invention will be described in detail with reference to the accompanying drawings.

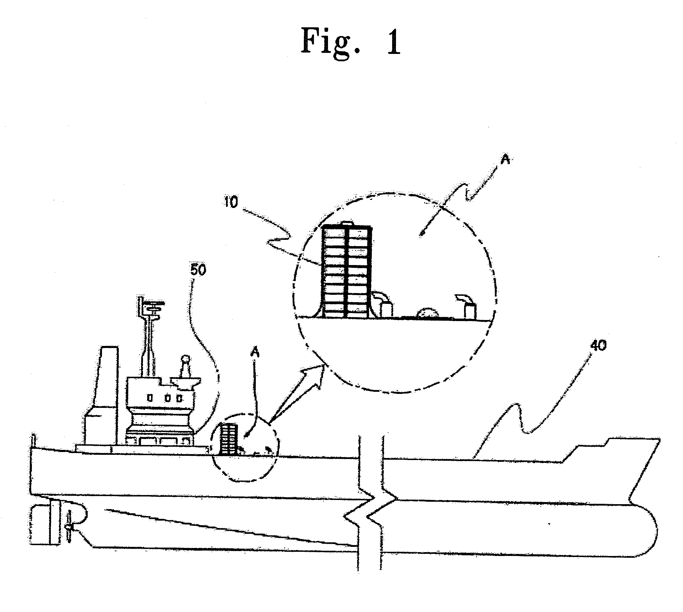

A ship including a wind power generator according to the prevent invention includes a deck 40 on a top surface thereof as shown in FIG. 1. A structure 50 and a wind power generator A are disposed on a top surface of the deck 40.

The structure 50 may be used as a control room for sailing the ship. In addition, the structure 50 may be variously used as cabin or container storages for loading goods.

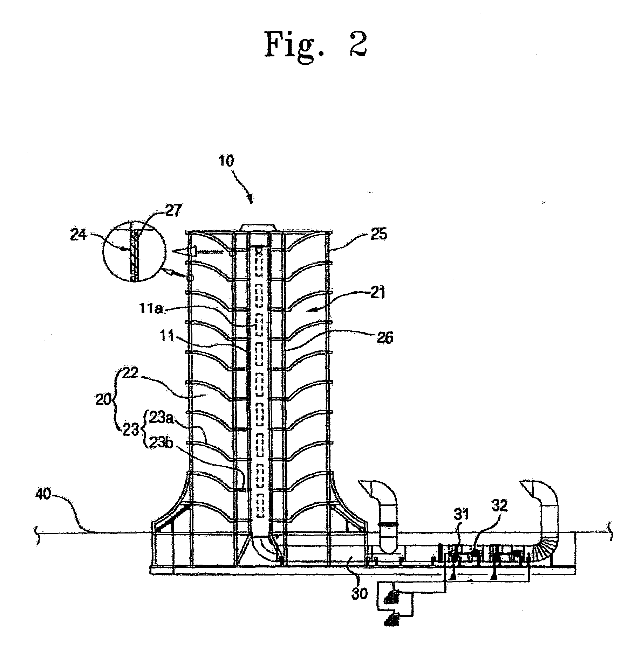

Referring to FIG. 1, the wind power generator A may be spaced from the structure 50 and have a height less than that of the structure 50 on the deck 40. Also, the wind power generator A may have a width less than that of the structure 50. Referring to FIG. 2, the wind power generator A includes a wind-collecting tower 10 disposed on the deck 40 to collect and discharge wind, an air duct 30 connected to a lower end of the wind-collecting tower 10 to transfer wind introduced from the wind-collecting tower 10, a turbine 31 disposed on one place of the air duct 30 and rotated by the wind transferred from the air duct 30, and a generator 32 connected to the turbine 31 and operated by the rotation of the turbine 31.

As shown in FIG. 2, the wind-collecting tower 10 includes a wind tunnel 11 and a guide part 20. Also, as shown in FIG. 1, when viewed on the basis of a front of the ship, the wind-collecting tower 10 is disposed closer to the front of the ship than the structure 50.

As shown in FIG. 2, the wind tunnel 11 includes a cylindrical member which stands upright on the deck 40. A plurality of through-holes 11a through which wind is introduced are defined in a circumferential surface of the wind tunnel 11.

The guide part 20 is configured to define a plurality of guide passages 21 disposed on a circumference of the wind tunnel 11 to guide wind into the through-holes 11a. The guide part 20 includes a plurality of wind-collecting plates 22 arranged in a radial direction on the circumference of the wind tunnel 11 and a plurality of guide plates 23 disposed on the circumference of the wind tunnel 11 and vertically spaced from each other between the wind-collecting plates 22.

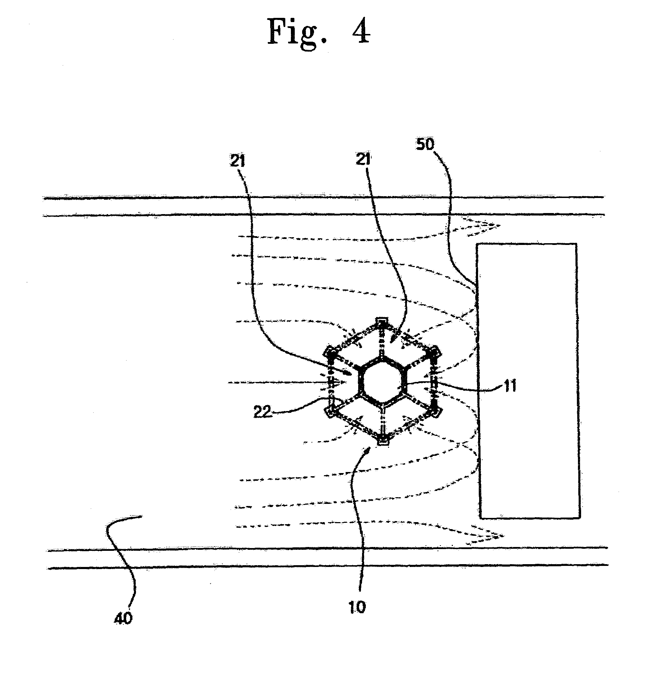

The wind-collecting plates 22 may serve as a longitudinal frame of the wind-collecting tower 10. As shown in FIGS. 2 to 4, the wind-collecting plates 22 are arranged in a radial direction along the circumference of the wind tunnel 11. Also, the wind-collecting plates 22 are spaced from each other at an angle of about 60° to pass through six edges of the wind tunnel 11 having a hexagonal shape. That is, the wind-collecting plates 22 may be arranged in a diagonal direction of the hexagonal shape on the whole.

The guide plates 23 are vertically spaced from each other between the wind-collecting plates 22 adjacent to each other to define a plurality of guide passages 21 so that wind blowing from the outside is guided into the through-holes 11a. Each of the guide plates 23 may have various shapes. For example, as shown in FIG. 2, each of the guide plates 23 may include a downwardly bent part 23a gradually inclined downward from the outside thereof toward the inside and a horizontal part 23b extending horizontally from the inside of the downwardly bent part 23a and connected to the circumference of the wind tunnel 11.

Also, the wind-collecting tower 10 may further include a plurality of louvered windows disposed on the guide part 20.

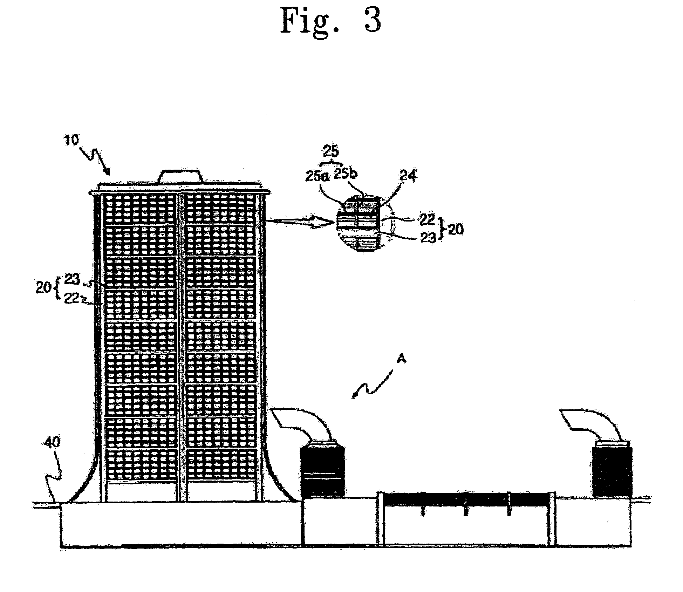

The plurality of louvered windows 24 smoothly guides wind blowing from the outside into the wind tunnel 11 along the guide passages 21. As shown in FIGS. 2 and 3, the plurality of louvered windows 23 are disposed spaced a predetermined distance from the wind tunnel 11 on at least one side of the guide passages 21 connected to the wind tunnel 11 to cross the guide passages 21. Alternatively, a louvered window 24 may be manufactured with a large size so that one louvered window 30 is mounted on one guide passage 21. However, as shown in FIGS. 2 and 3, each of support frame bodies 25 and 26 may be disposed on one place of each of the guide passages 21 to cross the guide passage 21, and then the plurality of louvered windows 24, each having a relatively small size, may be disposed on the support frame bodies 25 and 26.

Thus, as shown in FIG. 3, each of the support frame bodies 25 and 26 may cover the entire transverse surface of each of the guide passages 21. Thus, if each of the support frame bodies 25 and 26 has through-holes 27 through which wind passes, it makes no difference to allow each of the support frame bodies 25 and 26 to have any shape. However, in this embodiment, each of the support frame bodies 25 and 26 may have a lattice shape including a horizontal bar 25a and a vertical bar 25b. Here, the through-holes 27 may be defined by a plurality of lattice holes, each having a square shape, defined by the horizontal bar 25a and the vertical bar 25b.

Also, at least one or more, i.e., a plurality of support frame bodies 25 and 26 may be provided along each of the guide passages 21. For example, as shown in FIG. 2, two support fame bodies 26 and 25 may be disposed on the inside of the wind-collecting tower 10 adjacent to the wind tunnel 11 and the outermost portion of the wind-collecting tower 10, respectively. Thus, when the wind tunnel 11 has the hexagonal shape as shown in this embodiment, the support frame bodies 25 and 26 disposed between the wind-collecting plates 22 passing through the six edges of the wind tunnel 11 may also be coaxially arranged in a hexagonal shape on the whole.

In the ship including the wind power generator according to the present invention, the wind power generator may generate power by collecting wind using the wind-collecting tower 10 disposed on the deck 40. Thus, when wind blows, wind introduced through the plurality of louvered windows 24 disposed on the support frame bodies 25 and 26 is collected into the wind tunnel 11, and then is supplied into the turbine 31 through the air duct 30. Thus, the wind rotates the turbine 31 and the generator 32 connected to the turbine 31 to generate power. As a result, since the power generation using the engine is reduced to minimize power losses for generating power, the fuel consumption may be reduced and energy efficiency of the ship may be improved.

However, as shown in FIG. 1, in the ship including the wind power generator according to the present invention, the structure 50 disposed adjacent to the wind-collecting tower 10 and having a height and width greater than those of the wind-collecting tower 10 is disposed. Also, when viewed on the basis of the front of the ship, since the wind-collecting tower 10 is disposed closer to the front of the ship than the structure 50, the power-generating efficiency may be further improved. That is, when the ship advances forward, since wind blows from a front side of the wind-collecting tower 10 toward a rear side, the wind may be introduced into the wind tunnel 11 only through the guide passages 21 defined in a front side of the wind-collecting tower 10. However, since the wind-collecting tower 10 is disposed to approach the structure 50, e.g., a front of the control room, wind blowing from a front side of the ship may collide with a front surface of the structure 50 to repulse the wind.

Thus, the repulsed wind may be introduced into the wind tunnel 11 through the guide passages 21 defined in a rear side of the wind-collecting tower 10. Thus, the wind may be introduced through the entire circumferential surface of the wind-collecting tower 10 to increase an amount and velocity of wind supplied into the turbine 31, thereby improving the power-generating efficiency. Therefore, since the power generation using the power of the engine is minimized, the fuel consumption of the engine may be minimized, and thus, the air and see pollutants may also be maximally reduced.

## Claims

1. A ship including a wind-collecting tower, the ship comprising:
a structure (50) installed on a deck (40) disposed on a top surface of the ship;
a wind-collecting tower (10) spaced from the structure (50) on the deck (40), the wind-collecting tower (10) having a height and width less than those of the structure (50);
an air duct (30) connected to a lower end of the wind-collecting tower (10) to transfer wind introduced from the wind-collecting tower (10);
a turbine (31) disposed on one place of the air duct (30), the turbine (31) being rotated by the wind transferred from the air duct (30); and
a generator (32) connected to the turbine (31), the generator (32) being operated by the rotation of the turbine (31),
wherein the wind-collecting tower (10) comprises:
a wind tunnel (11) comprising a cylindrical member which stands upright on the deck (40), the wind tunnel (11) having a circumferential surface in which a plurality of through-holes (11a) for introducing wind are defined; and
a guide part having a plurality of guide passages (21) arranged along the circumference of the wind tunnel (11) to guide wind into the through-holes (11a),
wherein the guide part (20) comprises:
a plurality of wind-collecting plates (22) arranged in a radial direction along the circumference of the wind tunnel (11); and
a plurality of guide plates (23) arranged along the circumference of the wind tunnel (11), the plurality of guide plates (23) being vertically spaced from each other between the wind-collecting plates (22),
wherein the wind-collecting tower (10) further comprises a plurality of louvered winds (24) disposed spaced from the wind tunnel (11) on the guide passages (21) to guide the wind introduced into the wind tunnel (11) downward along the wind tunnel (11) without getting out of the wind tunnel (11).

2. The ship of claim 1, wherein the wind-collecting tower (10) is disposed closer to a front of the ship than the structure (50) when viewed on the basis of the front of the ship.
